# EUROPEAN PATENT APPLICATION

(11) **EP 3 489 669 A1**
(43) Date of publication of application: **29.05.2019**
(21) Application number: 17830800.3
(22) Date of filing: 28.06.2017
(51) Int. Cl.: G01N 27/12

(54) **GAS SENSOR**

(30) Priority: 19.07.2016 JP 2016141505
(71) Applicant: NGK Spark Plug Co., Ltd., Nagoya-shi, Aichi 467-8525 (JP)
(72) Inventor: YOKOYAMA Takahiro, Nagoya-shi Aichi 467-8525 (JP); NISHIYAMA Hiroyuki, Nagoya-shi Aichi 467-8525 (JP)
(74) Representative: J A Kemp
(86) International application number: PCT/JP2017/023714
(87) International publication number: WO 2018/016280

(57) **Abstract**

Provided is a gas sensor in which a structure for connection between a ceramic wiring board including a sensor element fixed thereto and an external circuit is rendered compact and miniaturization and reliable electrical connection are realized. A gas sensor 1 includes a ceramic wiring board 50 having an opening 50h and a sensor element 40 fixedly suspended within the opening through electricity conducting members 61 and 63. A distal end portion 50a of the ceramic wiring board is accommodated in a casing 10, 20, and a proximal end portion 50e extends to the outside of the casing. Electrically conductive pads 50p connected to the electricity conducting members through lead traces 50L are disposed on the front and back surfaces of the proximal end portion. The width W1 of the distal end portion 50a is larger than the width W2 of a narrow region 50R of the proximal end portion 50e that includes the electrically conductive pads 50p and portions of the lead traces 50L. The gas sensor further includes a tubular insulator 71 circumferentially surrounding the narrow region 5 and a plurality of spring terminals 79 that are accommodated in the insulator and come into elastic contact with the electrically conductive pads.

## Description

### TECHNICAL FIELD

The present invention relates to a gas sensor that detects the concentration of a particular gas.

### BACKGROUND ART

One known metal oxide sensor has a structure in which a sensor element is fixedly suspended within an opening of a wiring board by, for example, wire bonding (Patent Document 1) .

By fixing the sensor element in a suspended manner, the thermal capacity of the sensor element and the thermal influence from the surroundings can be reduced, and the accuracy of gas detection and the responsiveness of the sensor element can thereby be improved.

### PRIOR ART DOCUMENT

### PATENT DOCUMENT

Patent Document 1: Japanese Patent Application Laid-Open (*kokai*) No. 2007-298508 (FIG. 1)

### SUMMARY OF THE INVENTION

### PROBLEMS TO BE SOLVED BY THE INVENTION

In the sensor described in Patent Document 1, a plurality of (five) conductive pads electrically connected to the wire bonding through lead traces are arranged at one end of the generally square wiring board, and an external circuit is connected to the conductive pads.

To connect the external circuit to the conductive pads arranged on the above-described large (wide) wiring board, a pin connector, for example, is conventionally used. A problem with this method is that, since the connection structure is large, the sensor cannot be reduced in size. Moreover, since the conductor pads are arranged in a row in a wide area, a pin connector or the like to which the wiring board is to be connected may come into uneven contact with the conductor pads, and this may cause unstable electrical connection.

Accordingly, it is an object of the present invention to provide a gas sensor in which a structure for connection between a ceramic wiring board including a sensor element fixed thereto and an external circuit is rendered compact and miniaturization and reliable electrical connection are realized.

### MEANS FOR SOLVING THE PROBLEMS

In order to solve the above-described problem, the present invention provides a gas sensor comprising: a plate-shaped ceramic wiring board extending in a longitudinal direction and having an opening penetrating a distal end portion of the ceramic wiring board in a thickness direction thereof; and a sensor element having a detection section for detecting the concentration of a particular gas and a heater section for heating the detection section, the sensor element being fixedly suspended within the opening and electrically connected to the ceramic wiring board by a plurality of electricity conducting members, wherein the distal end portion of the ceramic wiring board in which the opening is formed is accommodated in a casing through which the gas can flow, and a proximal end portion of the ceramic wiring board extends to the outside of the casing; some of a plurality of electrically conductive pads electrically connected to the plurality of electricity conducting members through lead traces are disposed on a front surface of the proximal end portion of the ceramic wiring board and the remaining electrically conductive pads are disposed on a back surface of the proximal end portion of the ceramic wiring board; a width of the distal end portion of the ceramic wiring board having the opening as measured in a direction orthogonal to the longitudinal direction and the thickness direction is larger than a width of a narrow region of the proximal end portion of the ceramic wiring board, the narrow region containing the electrically conductive pads and portions of the lead traces connecting with the electrically conductive pads; and the gas sensor further comprises a tubular insulator which circumferentially surrounds the narrow region of the ceramic wiring board and a plurality of spring terminals which are accommodated in the insulator and elastically come into contact with the electrically conductive pads.

In this gas sensor, the width of the narrow region of the proximal end portion of the ceramic wiring board is smaller than the width of the distal end portion, and the electrically conductive pads are disposed on the front and back surfaces of the proximal end portion.

In this case, the width of the region (narrow region) of the ceramic wiring board in which the electrically conductive pads are disposed can be smaller as compared with the case where all the electrically conductive pads are disposed on one side of the ceramic wiring board. As a result, the structure for connection with an external circuit can be made compact and the gas sensor can be miniaturized by electrically connecting the plurality of spring terminals included in the tubular insulator to the electrically conductive pads such that the narrow region is circumferentially surrounded by the tubular insulator.

Also, unlike the case where all the electrically conductive pads are disposed on one side of the ceramic wiring board, the pressing force of the spring terminals is applied to both sides of the ceramic wiring board, and therefore the occurrence of breakage of the ceramic wiring board can prevented.

In the gas sensor of the present invention, each of the plurality of spring terminals may have a main body portion extending in the longitudinal direction, a turnback portion extending from a distal end of the main body portion toward a proximal end thereof, and a contact point-forming portion connected to the turnback portion and elastically coming into contact with the corresponding electrically conductive pad.

In this gas sensor, the turnback portions are elastically pressed against the electrically conductive pads and come into contact with the electrically conductive pads at the contact point-forming portions connected to the turnback portions. This allows the spring terminals and the electrically conductive pads to be electrically connected to each other in a reliable manner.

In the gas sensor of the present invention, the plurality of spring terminals may be connected to a plurality of lead wires extending from a connector for external circuit connection.

In this gas sensor, the ceramic wiring board can be electrically connected to the external circuit through the connector for external circuit connection in an easy and reliable manner.

### EFFECTS OF THE INVENTION

According to the present invention, there can be obtained a gas sensor in which a structure for connection between a ceramic wiring board including a sensor element fixed thereto and an external circuit is rendered compact and miniaturization and reliable electrical connection are realized.

### BRIEF DESCRIPTION OF THE DRAWINGS

[FIG. 1] Exploded perspective view of a gas sensor according to an embodiment of the present invention.
[FIG. 2] Top view of the gas sensor according to the embodiment of the present invention.
[FIG. 3] Bottom view of the gas sensor according to the embodiment of the present invention.
[FIG. 4] Perspective view of a ceramic wiring board accommodated in a casing.
[FIG. 5] Top view showing a manner of connecting the ceramic wiring board to a cassette connector.
[FIG. 6] Cross-sectional view taken along line A-A in FIG. 1.
[FIG. 7] Side view of a spring terminal.
[FIG. 8] Top view showing a modification of the ceramic wiring board.

### MODES FOR CARRYING OUT THE INVENTION

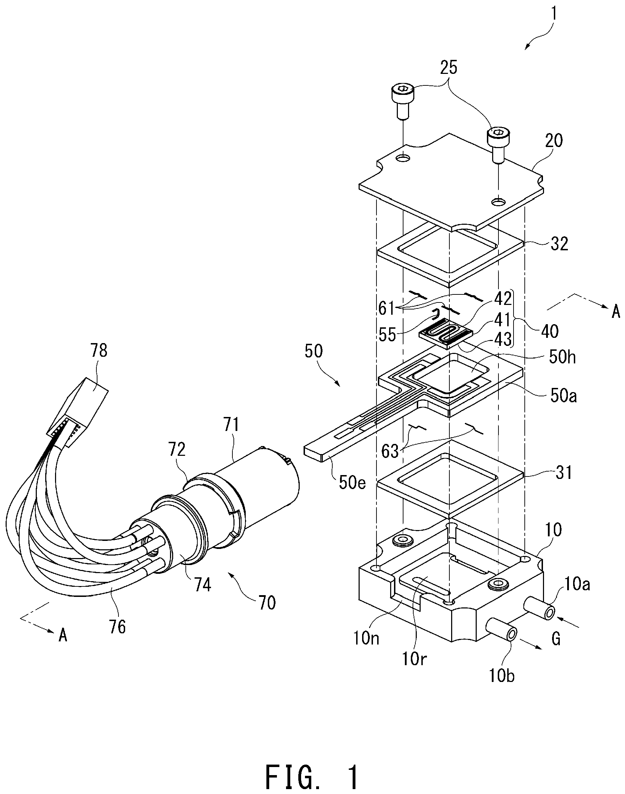

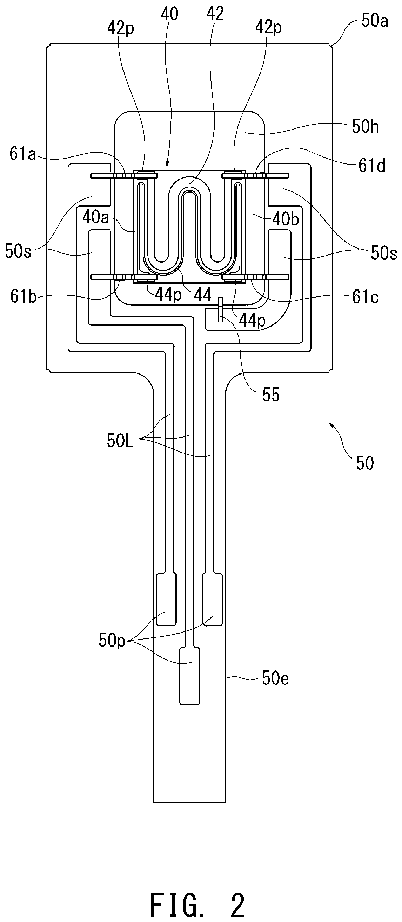

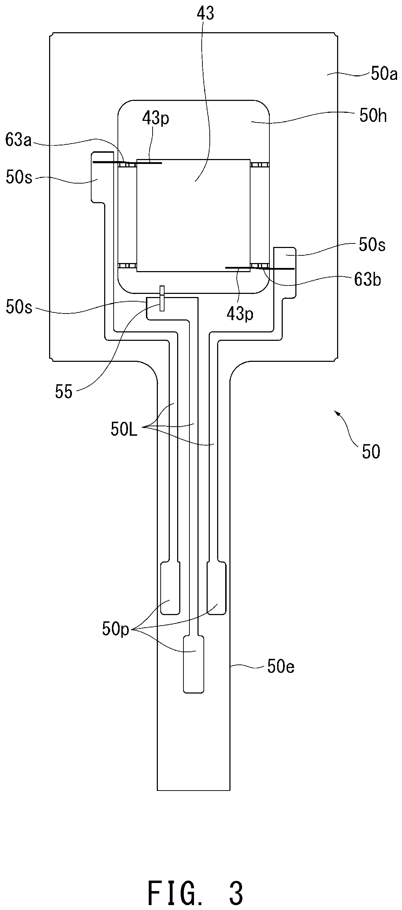

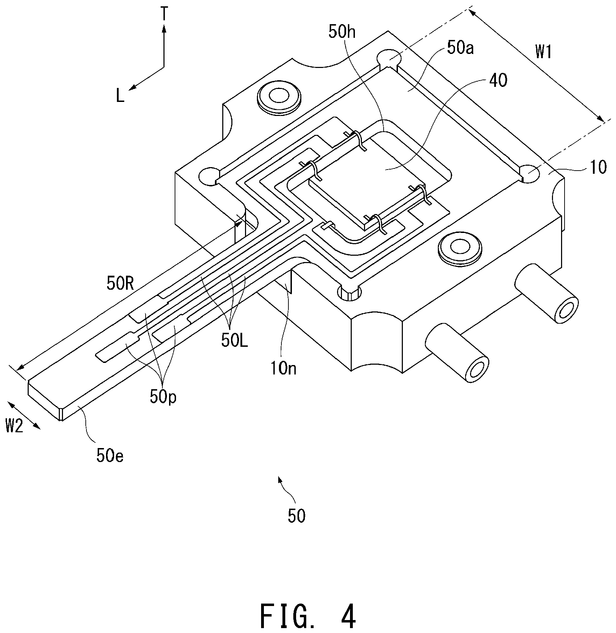

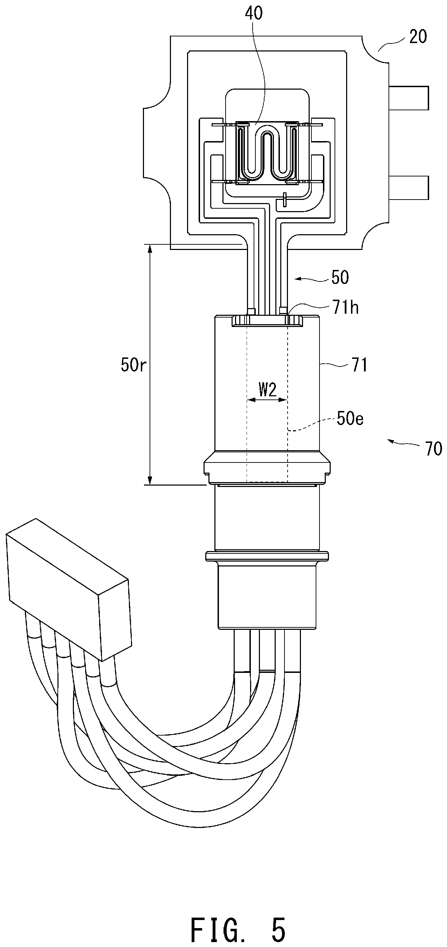

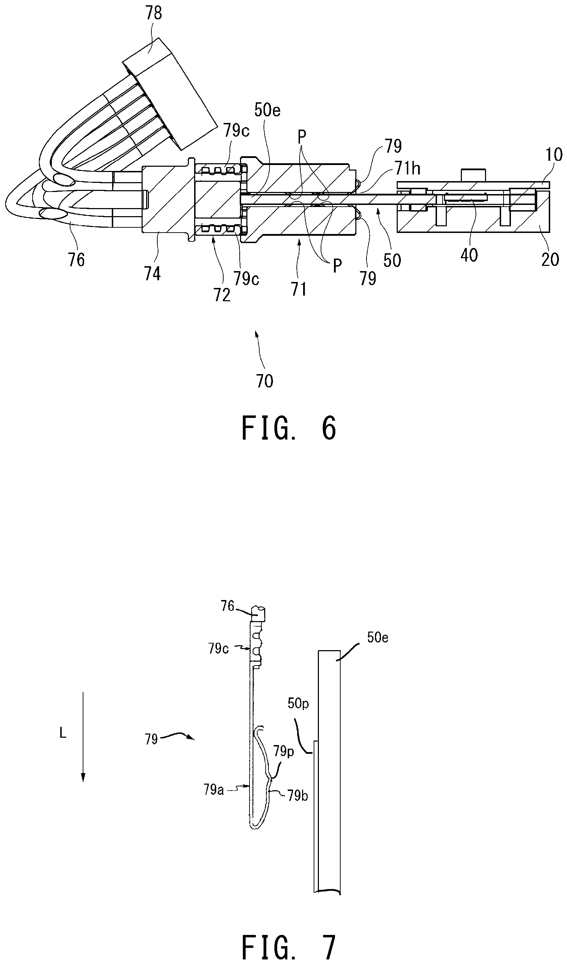

The present invention will next be described in detail with reference to the drawings. FIG. 1 is an exploded perspective view of a gas sensor 1 of an embodiment of the present invention, and FIGS. 2 and 3 are top and bottom views, respectively, of the gas sensor 1. FIG. 4 is a perspective view showing a ceramic wiring board 50 accommodated in a casing 10, and FIG. 5 is a top view showing a manner of connecting the ceramic wiring board 50 to a cassette connector 70. FIG. 6 is a cross-sectional view taken along line A-A in FIG. 1, and FIG. 7 is a side view of a spring terminal 79.

In FIG. 1, the gas sensor 1 includes: a lower case 10 having a generally rectangular box shape with an opening on its upper surface (an upward surface in FIG. 1); a lid 20 that covers the opening of the lower case 10; the ceramic wiring board 50 accommodated in the lower case 10; rectangular frame-shaped seal members (gaskets) 31 and 32; a sensor element 40 disposed within an opening 50h of the ceramic wiring board 50; electricity conducting members 61 and 63 that fixedly suspend the sensor element 40 within the opening 50h; and the cassette connector 70.

The lower case 10 and the lid 20 correspond to the "casing" in the claims.

The lower case 10 has an inner space 10r, a rectangular notch 10n extending downward from the upper edge of the lower case 10, and pipe-shaped introduction and discharge tubes 10a and 10b used as connection ports for pipes. The introduction tube 10a and the discharge tube 10b protrude rightward from one side surface (the right side-surface in FIG. 1) of the lower case 10, and the bores of the tubes 10a and 10b are in communication with the inner space 10r, so that gas G can flow into and from the lower case 10.

The ceramic wiring board 50 includes a rectangular frame-shaped distal end portion 50a and a proximal end portion 50e that has a narrower width than the distal end portion 50a and extends outward (leftward in FIG. 1) from one edge of the distal end portion 50a.

Each of the seal members 31 and 32 and the distal end portion 50a of the ceramic wiring board 50 is sized so as to be exactly fittable into the inner space 10r of the lower case 10. The seal member 31, the distal end portion 50a, and the seal member 32 stacked in this order from the lower case 10 side are accommodated in the inner space 10r. The proximal end portion 50e of the ceramic wiring board 50 protrudes from the notch 10n to the outside of the lower case 10.

Then the lid 20 is placed on the seal member 32 and fastened to the lower case 10 with bolts 25. The seal members 31 and 32 are thereby pressed between the lower case 10 and the lid 20, and the gap between the lower case 10 and the ceramic wiring board 50 is hermetically sealed.

As a result, the gas G introduced from the introduction tube 10a into the inner space 10r comes into contact with the sensor element 40, and the concentration of a particular gas is detected. Then the gas is discharged to the outside through the discharge tube 10b.

Notably, the sensor element 40 has a generally rectangular plate shape. A heater section 42 is disposed on the upper surface side (the upward side in FIG. 1) of a base 41, and a detection section 43 is disposed on the lower surface side of the base 41. In this structure, the detection section 43 and the heater section 42 are stacked on the upper and lower sides, respectively, of the base 41 and integrated together.

The electrical properties of the detection section 43 change in proportion to the concentration of the particular gas component, and the concentration of the particular gas component is detected by detecting an electric signal corresponding to the changing electrical properties. When the heater section 42 is energized, the heater section 42 generates heat, thereby heating the detection section 43 to its operating temperature. Output terminals of the detection section 43 and energization terminals of the heater section 42 are fixed and electrically connected to the ceramic wiring board 50 through the electricity conducting members 61 and 63 in a suspended manner.

The base 41 may be, for example, a ceramic substrate. The detection section 43 may be formed using, for example, an oxide semiconductor. The heater section 42 may be, for example, a circuit formed on a surface of the base 41 and serving as a heat-generating resistor.

A plurality of electrically conductive pads 50p electrically connected to the detection section 43 and the heater section 42 through the electricity conducting members 61 and 63 and lead traces 50L are disposed on the front and back surfaces of the proximal end portion 50e of the ceramic wiring board 50. The electric signal outputted from the detection section 43 is outputted to the outside through the electrically conductive pads 50p of the ceramic wiring board 50, and the heater section 42 is energized by electric power supplied from the outside through electrically conductive pads 50p and thereby generates heat.

As shown in FIG. 2, the sensor element 40 is formed into a rectangular shape in plan view, and two electricity conducting members 61a and 61b extending across a first side 40a (the left side in FIG. 2) of the sensor element 40 are joined to the ceramic wiring board 50 and to opposite side edges of the sensor element 40. Similarly, other two electricity conducting members 61c and 61d extending across a second side 40b (the right side in FIG. 2) opposed to the first side 40a are joined to the ceramic wiring board 50 and to the opposite side edges of the sensor element 40.

A plurality of (four in FIG. 2) element peripheral pads 50s are formed on the front surface of the ceramic wiring board 50 so as to surround the opening 50h. These element peripheral pads 50s are connected to the respective electrically conductive pads 50p (three pads in FIG. 2) through lead traces 50L.

Energizing pads 42p are formed at opposite ends of the heat-generating resistor forming the heater section 42, and two element peripheral pads 50s are disposed so as to be opposed to the respective energizing pads 42p. The electricity conducting members 61a and 61d establish connection between the energizing pads 42p and the respective element peripheral pads 50s opposed to the energizing pads 42p.

A temperature sensor 44 is disposed along the heater section 42, and energizing pads 44p are formed at opposite ends of the temperature sensor 44. Two element peripheral pads 50s are disposed so as to be opposed to the respective energizing pads 44p, and the electricity conducting members 61b and 61c establish connection between the energizing pads 44p and the respective element peripheral pads 50s opposed to the energizing pads 44p.

Notably, a U-shaped conductive member 55 is connected to the lower-right element peripheral pad 50s in FIG. 2. This conductive member 55 is connected to an element peripheral pad 50s on the opposite surface of the ceramic wiring board 50 (see FIG. 3).

As shown in FIG. 3, on the opposite surface of the sensor element 40 as well, a plurality of (three in FIG. 3) element peripheral pads 50s are formed on the back surface of the sensor element 40 so as to surround the opening 50h. These element peripheral pads 50s are connected to the respective electrically conductive pads 50p (three pads in FIG. 3) through lead traces 50L.

Two electricity conducting members 63a and 63b are joined to two energizing pads 43p connected to the detection section 43 of the sensor element 40 and are joined to the element peripheral pads 50s of the ceramic wiring board 50 opposed to these energizing pads 43p.

The electricity conducting members 61 and the conductive member 55 may be formed of, for example, Pt, and the electricity conducting members 63 may be formed of, for example, Au. They can be electrically connected to the respective energizing pads and element peripheral pads by, for example, welding. The energizing pads can be formed by applying, for example, a Pt paste to the base 41 of the sensor element 40 by printing and then firing the printed Pt paste. The element peripheral pads 50s, the lead traces 50L, and the electrically conductive pads 50p can be formed by printing, for example, a Au paste and then firing the printed Au paste.

Referring next to FIGS. 4 to 7, a manner of connecting the ceramic wiring board 50 to the cassette connector 70 will be described.

As shown in FIG. 4, the distal end portion 50a of the ceramic wiring board 50 is accommodated in the casing (case) 10, and the proximal end portion 50e extends outward from the casing (case) 10. The width W1 of the distal end portion 50a having the opening 50h formed therein, as measured in a direction orthogonal to the longitudinal direction L and the thickness direction T, is larger than the width W2 of a narrow region 50R of the proximal end portion 50e that includes the electrically conductive pads 50p and portions of the lead traces 50L connected to the electrically conductive pads 50p.

The "portions of the lead traces 50L" are portions of the lead traces 50L on the electrically conductive pad 50p side and include at least portions connected to the electrically conductive pads 50p.

As shown in FIG. 5, part of the narrow region 50R (on its proximal end portion 50e side) is inserted into a thorough hole 71h of a first separator 71 of the cassette connector 70, and the ceramic wiring board 50 is thereby electrically connected to the cassette connector 70 as described later.

The first separator 71 corresponds to the "insulator" in the claims.

As shown in FIG. 6, the cassette connector 70 includes: the tubular ceramic-made first separator 71 having the thorough hole 71h at its center; a tubular ceramic-made second separator 72; a rubber-made grommet 74; lead wires 76; and a connector 78 for external circuit connection that is a female connector connected to a male connector of an external circuit (not shown). Notably, the maximum outer diameter of the first separator 71 is smaller than the width of the casing including the lower case 10 and the lid 20 (see FIG. 5) .

The second separator 72 and the grommet 74 are coaxially connected in this order to the proximal end side of the first separator 71. A plurality of (six in this example) prescribed insertion holes are formed in each of the first separator 71 and the second separator 72, and spring terminals 79 are accommodated and held in the insertion holes.

The spring terminals 79 are in elastic contact at contact points P with the electrically conductive pads 50p of the proximal end portion 50e inserted into the thorough hole 71h and are electrically connected to the electrically conductive pads 50p. By means of crimping, exposed distal ends of the core conductors of the lead wires 76 are fixed to crimp terminal portions 79c of the spring terminals 79, which portions are located on the proximal end side, and the lead wires 76 are led outward through the thorough holes of the grommet 74, and the rear ends of the lead wires are connected to the female connector 78.

Notably, the proximal end portion 50e is held between the spring terminals 79 and thereby prevented from coming off the thorough hole 71h. The second separator 72 is held between the proximal end portion 50e and the grommet 74.

As shown in FIG. 7, each of the spring terminals 79 includes: a main body portion 79a extending in a longitudinal direction L; a turnback portion 79b extending from a distal end of the main body portion 79a toward a proximal end side (the upper side in FIG. 7); a contact point-forming portion 79p connected to the turnback portion 79b and to be in elastic contact with one of the electrically conductive pads 50p; and the above-described crimp terminal portion 79c.

The spring terminals 79 can be produced, for example, by pressing a refractory metal (Inconel) plate.

As described above, the width W2 of the narrow region 50R of the proximal end portion 50e of the ceramic wiring board 5-which region includes the electrically conductive pads 50p and portions of the lead traces 50L connected to the electrically conductive pads 50p-is smaller than the width W1 of the distal end portion 50a. Further, some of the electrically conductive pads 50p are disposed on the front surface of the proximal end portion 50e, and the remaining electrically conductive pads 50p are disposed on the back surface of the proximal end portion 50e.

Therefore, the width of the portion of the ceramic wiring board 50 in which the electrically conductive pads 50p are disposed (the narrow region 50R of the proximal end portion 50e) can be narrower as compared with the case where all the electrically conductive pads 50p are disposed on one side of the ceramic wiring board 50.

As a result, the structure for connection with an external circuit can be made compact and the gas sensor 1 can be miniaturized by electrically connecting the plurality of spring terminals 79 included in the tubular insulator 71 to the electrically conductive pads 50p such that the narrow region 50R is circumferentially surrounded by the tubular insulator 71.

Also, unlike the case where all the electrically conductive pads 50p are disposed on one side of the ceramic wiring board 50, the pressing force of the spring terminals 79 is applied to opposite sides of the ceramic wiring board 50, and therefore breakage of the ceramic wiring board 50 can be prevented.

In the above embodiment, each of the spring terminals 79 includes the turnback portion 79b extending from the main body portion 79a and the contact point-forming portion 79p. In this case, the elastic force of each spring terminal 79 presses its turnback portion 79b toward a corresponding electrically conductive pad 50p of the proximal end portion 50e, and the contact point-forming portion 79p connected to the turnback portion 79b comes into contact with the electrically conductive pad 50p, so that the spring terminal 79 and the electrically conductive pad 50p can be electrically connected to each other in a reliable manner.

In the above embodiment, the spring terminals 79 are connected to the respective lead wires 76 extending from the connector 78 for external circuit connection, so that the external circuit and the ceramic wiring board 50 can be electrically connected to each other through the connector 78 for external circuit connection in an easy and reliable manner.

It will be appreciated that the present invention is not limited to the embodiment described above and encompasses various modifications and equivalents within the spirit and scope of the present invention.

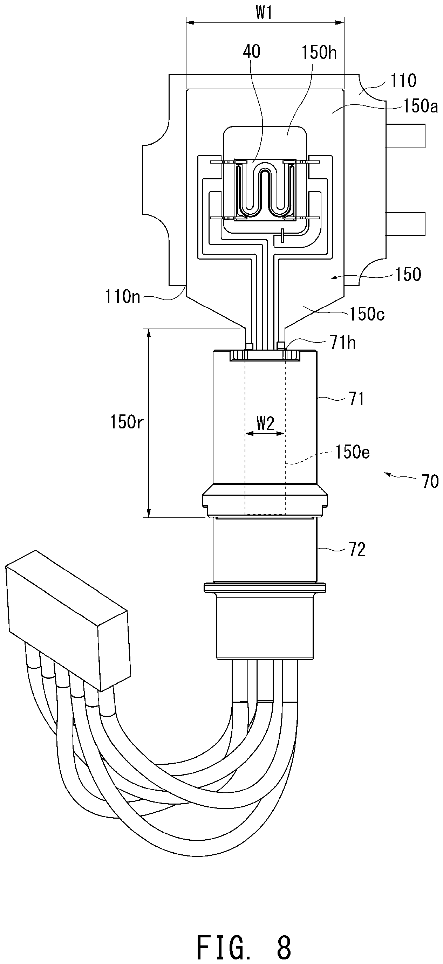

For example, as shown in FIG. 8, a ceramic wiring board 150 having an intermediate portion 150c may be employed. A distal end portion 150a of the ceramic wiring board 150 having an opening 150h for fixedly suspending the sensor element 40 is accommodated in a case (casing) 110. The intermediate portion 150c is provided between the distal end portion 150a and a narrow region 150R. The intermediate portion 150c extends outward through a notch 110n of the casing 110 while maintaining the same width W1 as the distal end portion 150a, is tapered toward the narrow region 150R such that its width decreases to W2, and is integrally connected to the narrow region 150R.

In this case, the narrow region 150R which extends from the intermediate portion 150c, has the reduced width W2, and includes the electrically conductive pads and portions of the lead traces connected to the electrically conductive pads is partially accommodated in the thorough hole 71h of the insulator 71. Also in this embodiment, the structure for connection with the external circuit can be made compact, and the gas sensor can be reduced in size.

The shapes of the ceramic wiring board and the casing, the shapes and numbers of the electrically conductive pads and the spring terminals, and the shapes, etc. of the sensor element and the insulator are not limited to those in the above embodiments. The structures, types, etc. of the heater section and the detection section are not limited to those in the above embodiments. A circuit board including a circuit that processes the electric signal outputted from the detection section 43 and a circuit that energizes and controls the heater section 42 may be accommodated in the connector 78 for external circuit connection.

### DESCRIPTION OF REFERENCE NUMERALS

- 1: gas sensor
- 10, 20, 110: casing
- 40: sensor element
- 42: heater section
- 43: detection section
- 50, 150: ceramic wiring board
- 50a, 150a: distal end portion
- 50e, 150e: proximal end portion
- 50h, 150h: opening
- 50L: lead trace
- 50p: electrically conductive pad
- 50R, 150R: narrow region
- 61, 63: electricity conducting member
- 71: insulator
- 76: lead wire
- 78: connector for external circuit connection
- 79: spring terminal
- 79a: main body portion
- 79b: turnback portion
- 79p: contact point-forming portion
- G: gas
- L: longitudinal direction
- T: thickness direction of ceramic wiring board
- W1: width of distal end portion
- W2: width of narrow region

## Claims

1. A gas sensor comprising:
a plate-shaped ceramic wiring board extending in a longitudinal direction and having an opening penetrating a distal end portion of the ceramic wiring board in a thickness direction thereof; and
a sensor element having a detection section for detecting the concentration of a particular gas and a heater section for heating the detection section, the sensor element being fixedly suspended within the opening and electrically connected to the ceramic wiring board by a plurality of electricity conducting members, wherein
the distal end portion of the ceramic wiring board in which the opening is formed is accommodated in a casing through which the gas can flow, and a proximal end portion of the ceramic wiring board extends to the outside of the casing;
some of a plurality of electrically conductive pads electrically connected to the plurality of electricity conducting members through lead traces are disposed on a front surface of the proximal end portion of the ceramic wiring board and the remaining electrically conductive pads are disposed on a back surface of the proximal end portion of the ceramic wiring board;
a width of the distal end portion of the ceramic wiring board having the opening as measured in a direction orthogonal to the longitudinal direction and the thickness direction is larger than a width of a narrow region of the proximal end portion of the ceramic wiring board, the narrow region containing the electrically conductive pads and portions of the lead traces connecting with the electrically conductive pads; and
the gas sensor further comprises
a tubular insulator which circumferentially surrounds the narrow region of the ceramic wiring board and
a plurality of spring terminals which are accommodated in the insulator and elastically come into contact with the electrically conductive pads.

2. A gas sensor according to claim 1, wherein each of the plurality of spring terminals has a main body portion extending in the longitudinal direction, a turnback portion extending from a distal end of the main body portion toward a proximal end thereof, and a contact point-forming portion connected to the turnback portion and elastically coming into contact with the corresponding electrically conductive pad.

3. A gas sensor according to claim 1 or 2, wherein the plurality of spring terminals are connected to a plurality of lead wires extending from a connector for external circuit connection.
